# EUROPEAN PATENT SPECIFICATION

(11) **EP 3 536 139 B1**
(45) Date of publication and mention of the grant of the patent: **13.10.2021**
(21) Application number: 19161726.5
(22) Date of filing: 08.03.2019
(51) Int. Cl.: A01D 34/416, A01D 34/73, A01G 3/06

(54) **EDGER ATTACHMENT FOR A TRIMMER HEAD**
KANTENAUFSATZ FÜR EINEN TRIMMERKOPF
FIXATION DE COUPE-BORDURES POUR TÊTE DE TONDEUSE

(30) Priority: 09.03.2018 US 201862640815 P
(43) Date of publication of application: 11.09.2019
(73) Proprietor: Techtronic Outdoor Products Technology Limited, Hamilton HM12 (BM)
(72) Inventor: Hoffman, Ronald J., Iva, SC 29655 (US)
(74) Representative: BRP Renaud & Partner mbB Rechtsanwälte Patentanwälte Steuerberater

(56) References cited:
- KR-B1- 101 032 898
- US-A1- 2015 319 922
- US-A1- 2017 339 825
- US-B1- 6 446 346

## Description

### FIELD OF THE INVENTION

The present invention relates to edger blades.

### BACKGROUND TO THE INVENTION

Generally, trimmers are used to cut grass and weeds and are often used to edge around trees, near fences and walls, and along landscape borders. Conventional string trimmers include an elongated shaft with a rotating element or head near the end of the shaft, spool or string head is attached to the head, and a blade coupled to the head. Typically, the string head includes a monofilament line (i.e., trimmer line) rotated by the head for cutting and trimming along landscaped areas, fences, walls, etc.

According to its abstract, US-A-2017/339825 describes a grass cutting head, configured for rotation around a rotation axis, comprising a housing for a cutting line; a space inside the housing for winding a stock of cutting line; at least one hole in a side wall of the housing, through which the cutting line passes from the inner space towards the outside of the housing. At least one cutting blade with at least one cutting edge is associated with the housing of the grass cutting head.

### SUMMARY OF THE INVENTION

According to the invention, an edger blade generally includes a body that provides an interface for attachment to a drive mechanism for rotation about an axis and a blade portion that is coupled to the body. The body has a spiral portion that spirals along the axis. The body is formed of a first material. The blade portion is oriented in a plane substantially perpendicular to the axis. The blade portion is formed of a second material different than the first material.

The interface may define a notch for receiving a radial drive projection of a trimmer head when the edger blade is in driving engagement.

A radial length of the blade member may increase along its circumference.

In a preferred aspect, the blade portion may have a radial outer edge extending at least partially about an axis of rotation. The blade portion may have an increasing radial length in a direction of rotation of the blade. The blade portion may define notches that may extend inwardly from the radial outer edge.

The blade portion is oriented in a plane substantially perpendicular to the axis.

The radial length of the body may decrease along its circumference.

The decrease may be in a direction of rotation of the body.

The body may include a plurality of axially-projecting ridges on one face.

The ridges may be shaped and positioned to engage with material being cut from a ground surface.

In another preferred aspect, the edger blade may include a plurality of axially-projecting ridges that may be on one face of the body. The body may have an interface rotatable about an axis and may have opposite axial faces.

The blade may have a radial outer edge.

The blade may define notches extending from the outer edge.

The notches may extend inwardly from the radial outer edge at an angle less than 90 degrees relative to the axis.

The ridges may be positioned on the spiral portion of the body.

Other independent aspects of the disclosure may become apparent by consideration of the detailed description, claims and accompanying drawings.

### BRIEF DESCRIPTION OF THE DRAWINGS

Fig. 1 is a perspective view of a trimmer head.
Fig. 2 is a bottom view of a body of the head of Fig. 1.
Fig. 3 is a bottom view of the head with an attachment supported thereon.
Fig. 4 is a bottom view of the head and the attachment as shown in Fig. 3, with the lower housing removed.
Fig. 5 is a bottom view of the head and the attachment as shown in Fig. 3, with a retainer removed.
Fig. 6 is a cross-sectional side view of the head and the attachment taken generally along line 6—6 in Fig. 3.
Fig. 7 is a top perspective view of an attachment, such as an edger attachment.
Fig. 8 is a bottom perspective view of the attachment of Fig. 7.
Fig. 9 is a top view of the attachment of Fig. 7.
Fig. 10 is a bottom view of the attachment of Fig. 7.
Fig. 11 is a side view of the attachment of Fig. 7.
Fig. 12 is another side view of the attachment of Fig. 7.
Fig. 13 is yet another side view of the attachment of Fig. 7.
Fig. 14 is a further side view of the attachment of Fig. 7.
Fig. 15 is an enlarged perspective view of a portion of the attachment of Fig. 7.
Fig. 16 is an enlarged top view of a portion of the attachment of Fig. 7.
Fig. 17 is an enlarged perspective cross-sectional view of the attachment of Fig. 7, taken generally along line 17—17 in Fig. 9.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting of' and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

Relative terminology, such as, for example, "about", "approximately", "substantially", etc., used in connection with a quantity or condition would be understood by those of ordinary skill to be inclusive of the stated value and has the meaning dictated by the context (for example, the term includes at least the degree of error associated with the measurement of, tolerances (e.g., manufacturing, assembly, use, etc.) associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

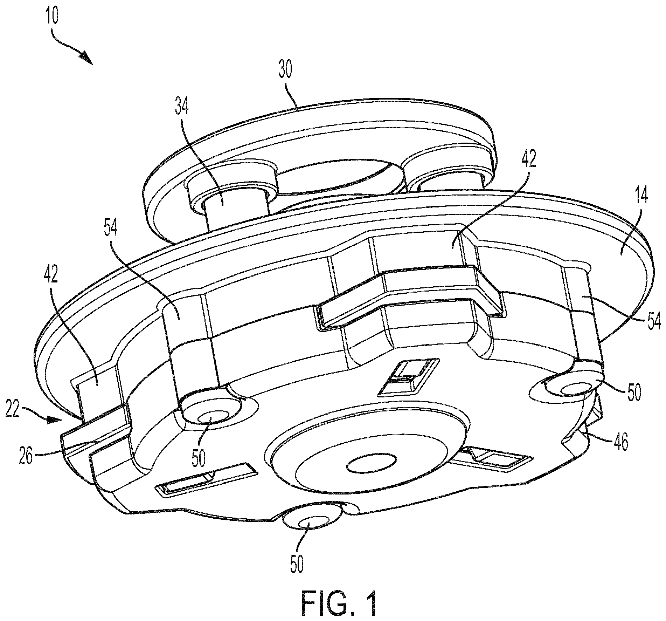

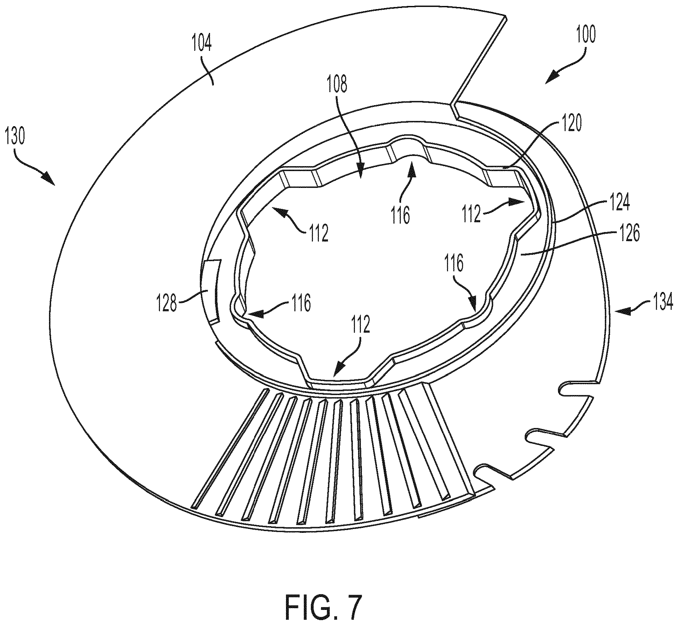

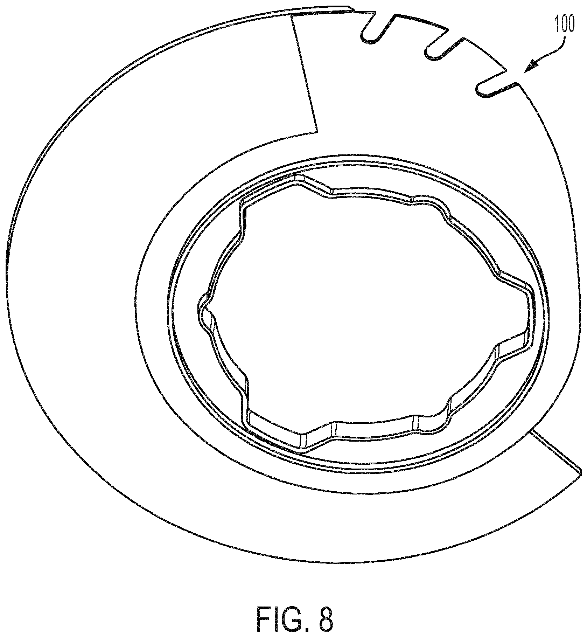

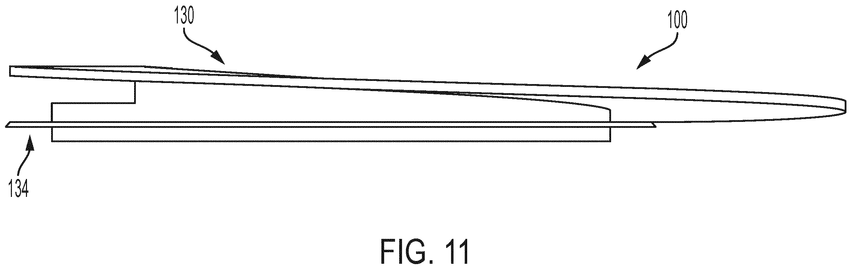

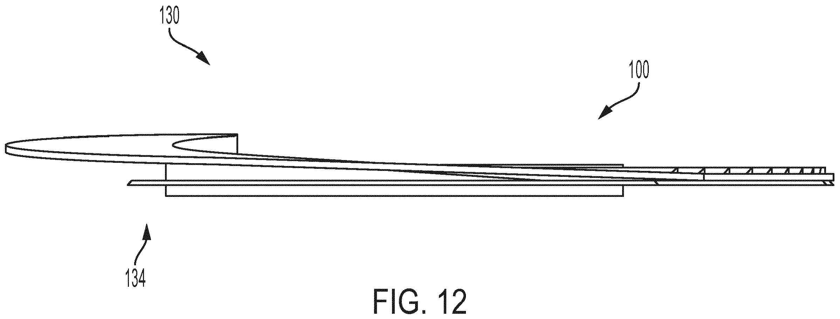

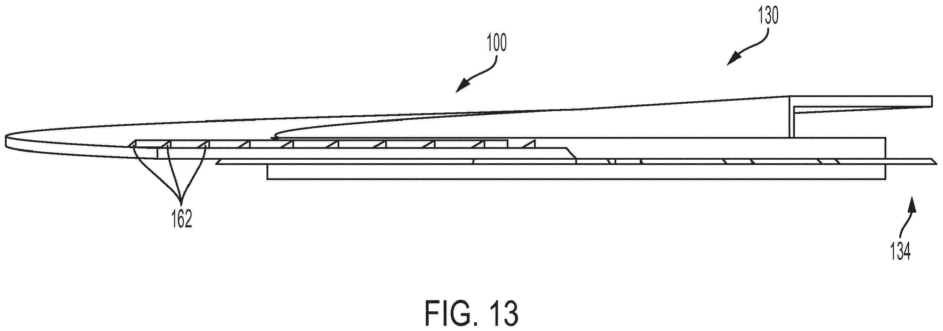

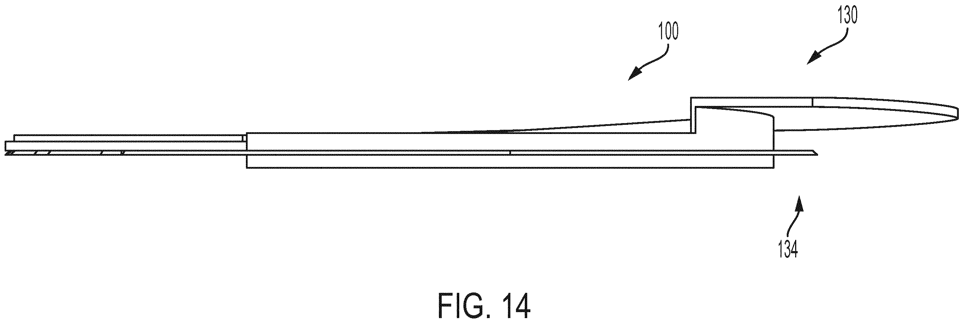

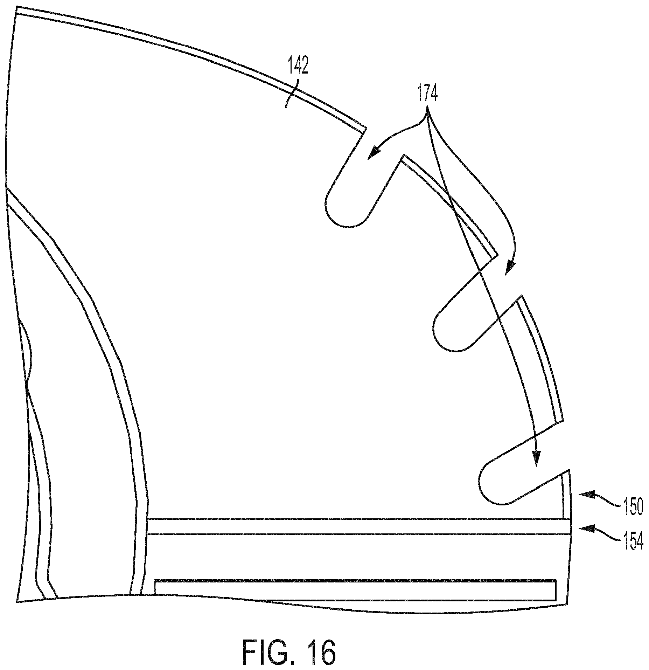

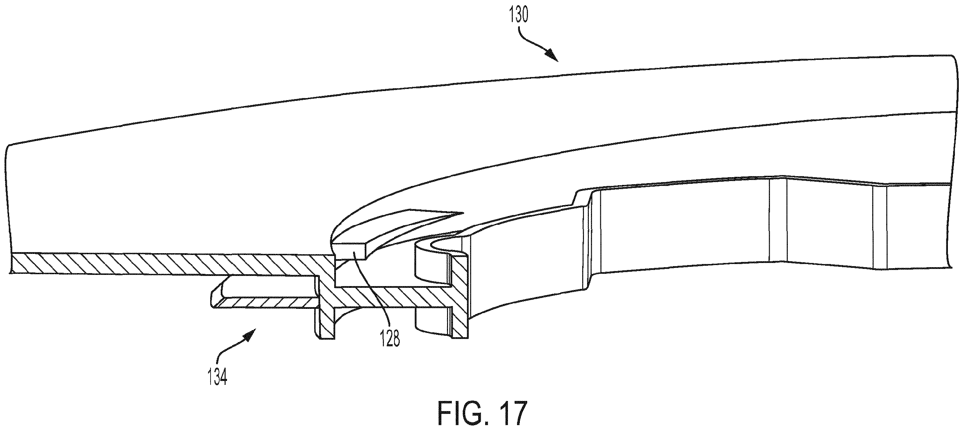

In general, the present disclosure relates to an edger attachment 100 (see Figs. 7-17) for use with a trimmer head 10 (see Figs. 1-6). The edger attachment 100 is selectively and removably coupled to the head 10, along with various other attachments (not shown) to conduct associated operations (e.g., cutting, trimming, blowing, etc.) with the trimmer. The head 10 and each attachment 100 have a complementary interface for installation and removal/replacement of the attachment(s) 100.

The trimmer head 10 (see Figs. 1-6) is for use on an exemplary trimmer (not shown). Such a trimmer generally includes a shaft with a handle toward one end and a motor housing enclosing an electric motor with a motor-driven output or drive shaft, having an axis of rotation, for connection to a trimmer head on the other end. Various powered trimmers (e.g., batterypowered, gas-powered, etc.) may be used with the trimmer head 10. Exemplary trimmers are described and illustrated in U.S. Patent No. 8,464,431, issued on June 18, 2013, and in U.S. Patent No. 6,108,914, issued August 29, 2000.

As shown in Figs. 1-6, the head 10 generally includes a body 14 rotatable about an axis of rotation A and defining an axial opening 18 for connection to the trimmer drive shaft. The body 14 defines an annular channel 22 for receiving a selected attachment 100. The head 10 includes a retainer assembly cooperating with the body 14 to selectively retain the attachment 100.

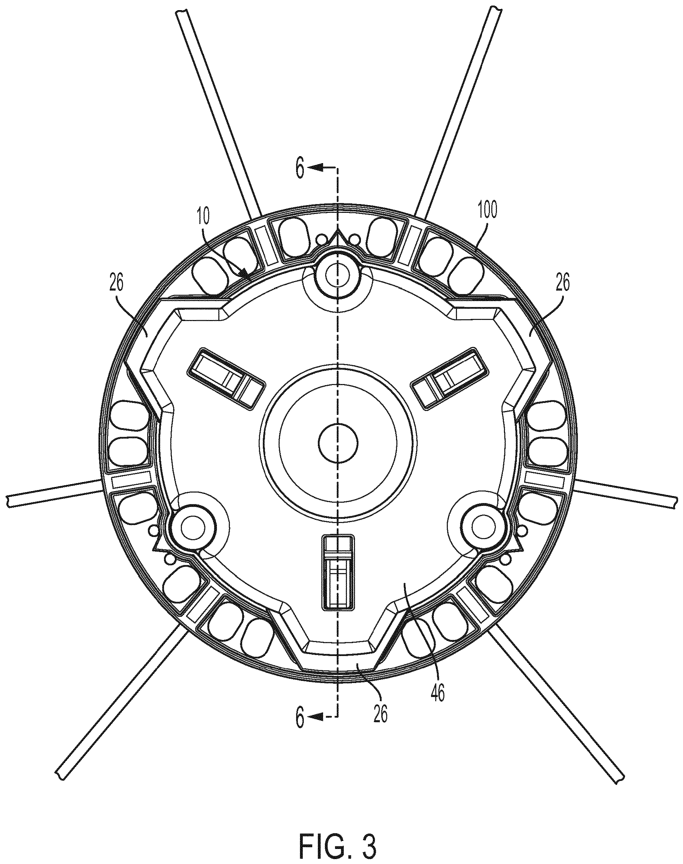

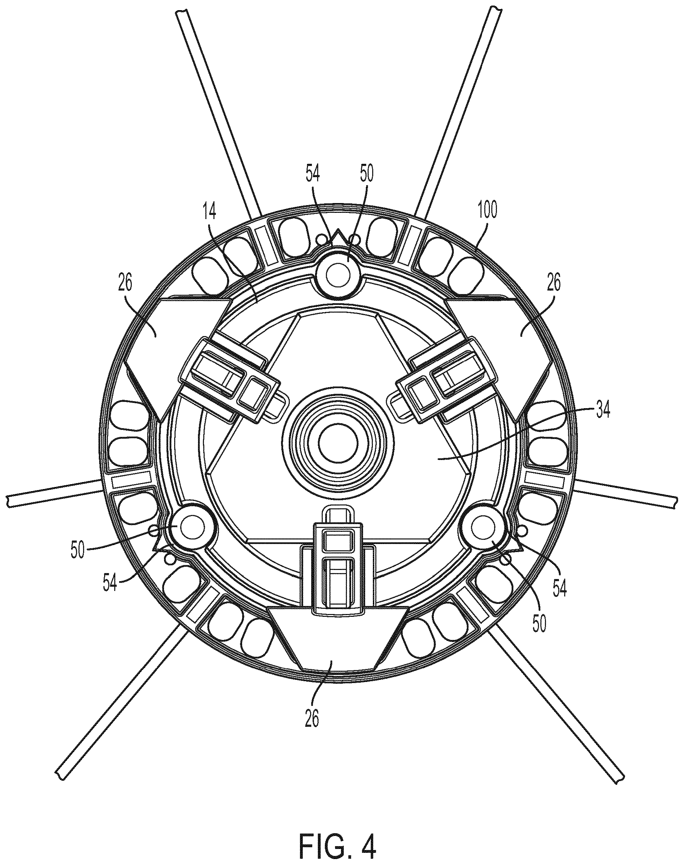

In the illustrated construction, the retainer assembly includes a number (e.g., three shown) of retainers 26 adjustable between a retaining position (Figs. 3-4 and 6), in which the retainers 26 cover or block the channel 22 to retain the selected attachment 100, and a release position (not shown), in which the retainers 26 uncover or unblock the channel 22 to allow the attachment 100 to move relative to the channel 22 (e.g., to be removed or installed). As shown in Fig. 4, the retainers 26 have substantially the same shape (e.g., trapezoidal) and are spaced substantially equidistant about the axis A (e.g., spaced about 120° apart).

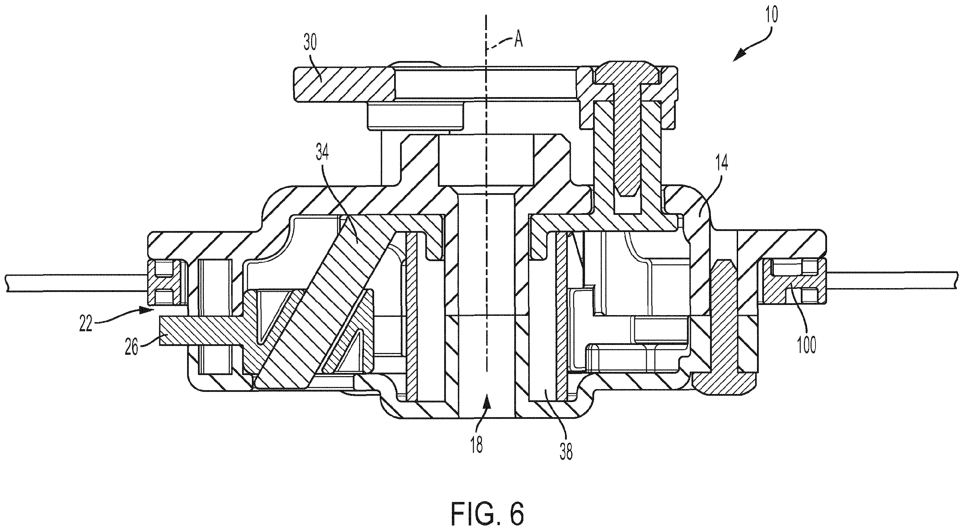

An actuating mechanism (see Figs. 1 and 6; e.g., including a strike plate 30 and a retainer carrier 34) is operable by a user (e.g., by engaging the strike plate 30, a lever (not shown), a guard (not shown), etc.) to adjust the position of the retainers 26. A biasing member biases the retainers 26 to the retaining position; for example, in the illustrated construction (see Fig. 6), a spring 38 biases the actuating mechanism to a position corresponding to the retaining position of the retainers 26.

In the illustrated construction, the retainers 26 are radially movable between the retaining and the release positions, and the actuating mechanism is axially movable to adjust the position of the retainers 26. In other constructions (not shown), the retainers 26 and/or the actuating mechanism may be movable in another manner (e.g., circumferentially, axially, radially, combinations thereof, etc.) between the positions.

In other constructions (not shown), fewer or more than three retainers 26 may be provided. Also, each or all of the retainers 26 may have a different shape than illustrated. In addition, the retainers 26 may have a different spacing (e.g., equidistant based on the number of retainers 26, non-equidistant, etc.).

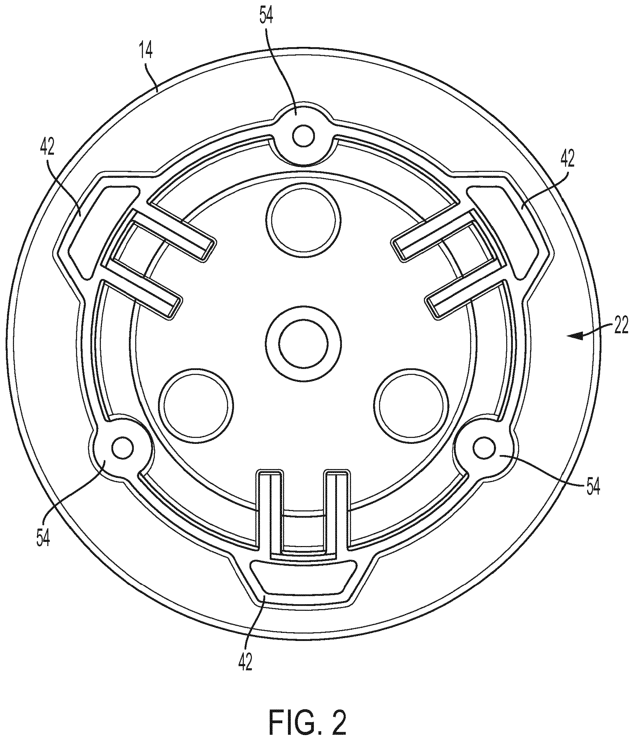

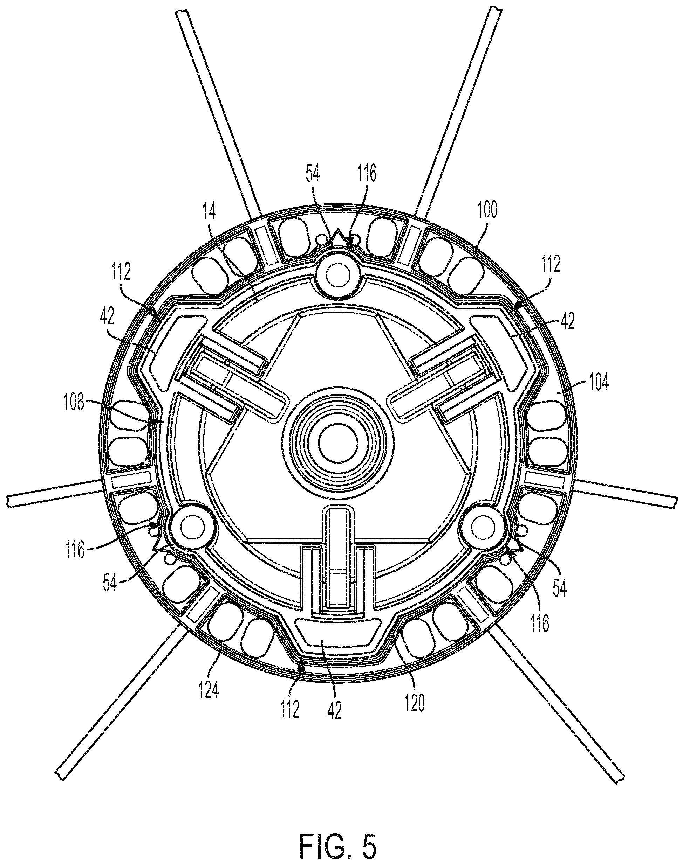

A drive arrangement is provided between the head 10 and the attachment 100 to transfer rotational movement of the head 10 to the attachment 100. In the illustrated construction, body 14 includes (see Figs. 2 and 5) a number (e.g., three shown) of radial projections 42 drivingly engageable with a supported attachment 100. The illustrated projections 42 have substantially the same shape (e.g., trapezoidal) and are spaced substantially equidistant about the axis A (e.g., spaced about 120° apart). In the illustrated construction, the retainers 26 are positioned circumferentially in alignment with and overlying an associated projection 42 of the body 14.

In other constructions (not shown), the body 14 may include fewer or more than three projections 42. Also, each or all of the projections 42 may have a different shape than illustrated. In addition, the projections 42 may have a different spacing (e.g., equidistant based on the number of projections 42 on the body 14, non-equidistant, etc.). Further, the projections 42 may extend in and/or engage the attachment 100 in a different manner (e.g., axially, circumferentially, combinations thereof, etc.).

The head 10 also includes (see Figs. 1 and 3) a lower housing 46 connectable to the body 14, for example, with fasteners 50, to house and/or retain components of the head 10 as a unit. The lower housing 46 covers the lower portion of the components of the head 10 to inhibit cut material, debris, etc. from interfering with operation of the components. The lower housing 46 is sized to allow installation and removal of the attachment 100. The body 14 includes (see Figs. 2 and 4-5) and an associated boss 54 for each fastener 50, and each illustrated boss 54 projects radially into the channel 22.

Figs. 7-17 illustrate the edger attachment 100. As mentioned above, in other constructions (not shown), the attachment 100 may include, for example, a cutter, a string trimmer, a blower, etc. The illustrated attachment 100 includes a body 104 defining a central opening 108 to engage the body 14 of the head 10 (e.g., in the channel 22).

The attachment 100 defines a number (e.g., three shown) of notches 112 and a number (e.g., three shown) of recesses 116 around the perimeter of the opening 108. The notches 112 are complementary to and drivingly engageable with the projections 42 on the body 14 to cooperate to provide the drive arrangement. The illustrated notches 112 are shaped (e.g., trapezoidal) and positioned (e.g., equidistant; about 120° apart) to receive the projections 42. The recesses 116 are shaped and positioned to receive the bosses 54. In the illustrated construction, the attachment 100 is supportable on the body 14 in any position in which the projections 42 engage the notches 112.

In other constructions (not shown), attachment 100 may include fewer or more than three notches 112. Also, each or all of the notches 112 may have a different shape than illustrated. In addition, the notches 112 may have a different spacing (e.g., equidistant based on the number of notches 112, non-equidistant, etc.). In constructions in which the interface between the body 14 and the attachment 100 is non-uniform (e.g., the projections 42 and corresponding notches 112 have a different shape and/positioning), the attachment 100 may be installed in a limited number of rotational positions relative to the body 14. In other constructions (not shown), the projections 42 and notches 112 may be reversed and positioned on the other of the body 14 and the attachment 100.

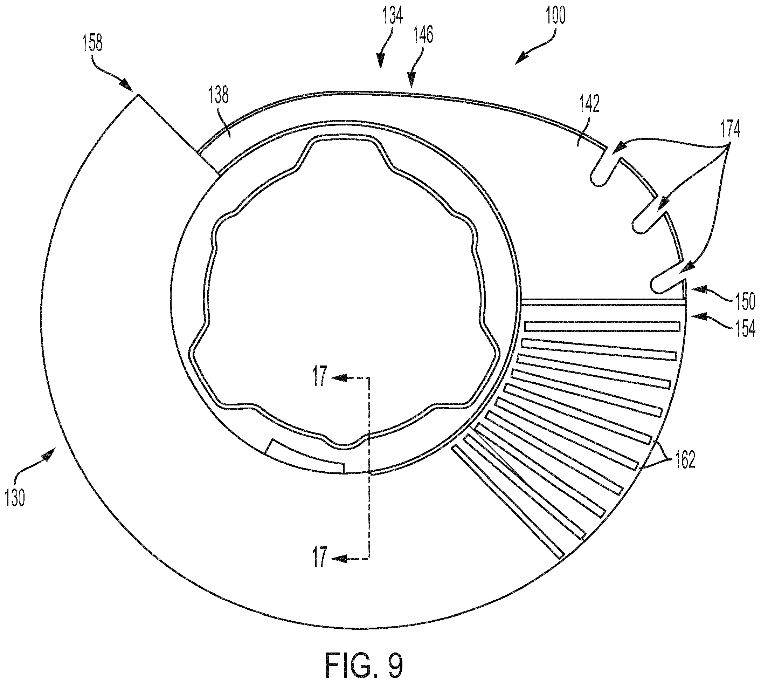

The body 104 includes an inner rim 120, which engages the radial wall of the channel 22 of the body 14, an outer rim 124, and an annular plate 126 extending therebetween. A circumferential ridge 128 extends radially inwardly from the outer rim 124. The operating portion of the attachment 100, described in more detail below, extends from the outer rim 124. In the illustrated construction, the attachment 100 is configured to be rotated about the axis A in a clockwise direction in Fig. 9.

The body 104 includes a spiral portion 130 extending radially from the outer rim 124 over a portion of the circumference (e.g., between about 210° and about 240°). The body 104 and the spiral portion 130 are formed as a unit from a material such as, for example, plastic. The height of the outer rim 124 is constant until the height of the spiral portion 130 exceeds the height of the outer rim 124. The height of the outer rim 124 increases with the spiral portion 130.

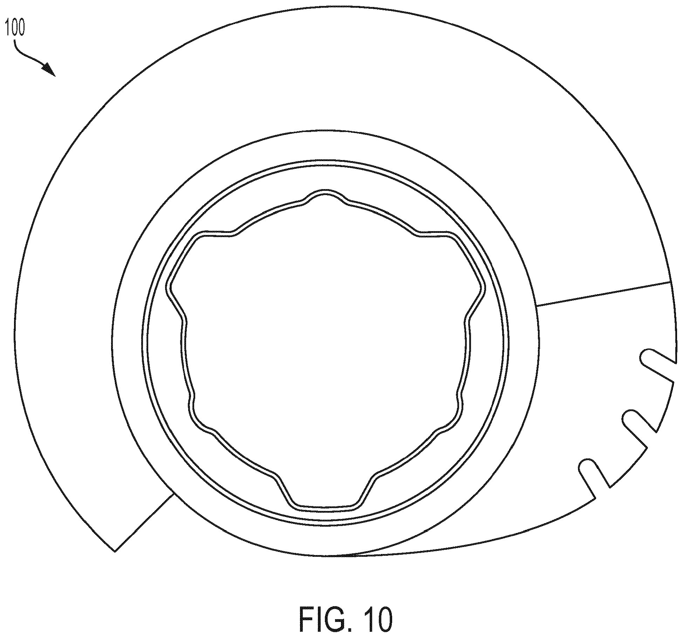

The attachment 100 also includes a blade portion 134 connected to the body 104 and the spiral portion 130. The blade portion 134 is substantially planar and extends perpendicular to the axis A. The spiral portion 130 spirals along the axis A away from the plane of the blade portion 134. The attachment 100 thus generally has a spiral side or face (e.g., the face shown in Fig. 9) and a blade side or face (e.g., the face shown in Fig. 10).

The blade portion 134 includes an annular collar 138 extending from the outer rim 124 and about the axis A and a blade member 142 extending over a portion of the circumference (e.g., between about 120° and about 150°). The blade portion 134 is formed as a unit from a material such as, for example, metal. The blade portion 134 has an angled outer edge.

At the leading edge 146, the blade member 142 has the same outer diameter as the collar 138. The radial length of the blade member 142 increases along its circumference to the trailing edge 150 at the transition to the leading edge 154 of the spiral portion 130. At the leading edge 154, the spiral portion 130 has the same radial length as the trailing edge 150 of the blade member 142. The radial length of the spiral portion 130 decreases along its circumference to the trailing edge 158, proximate the leading edge 146 of the blade member 142.

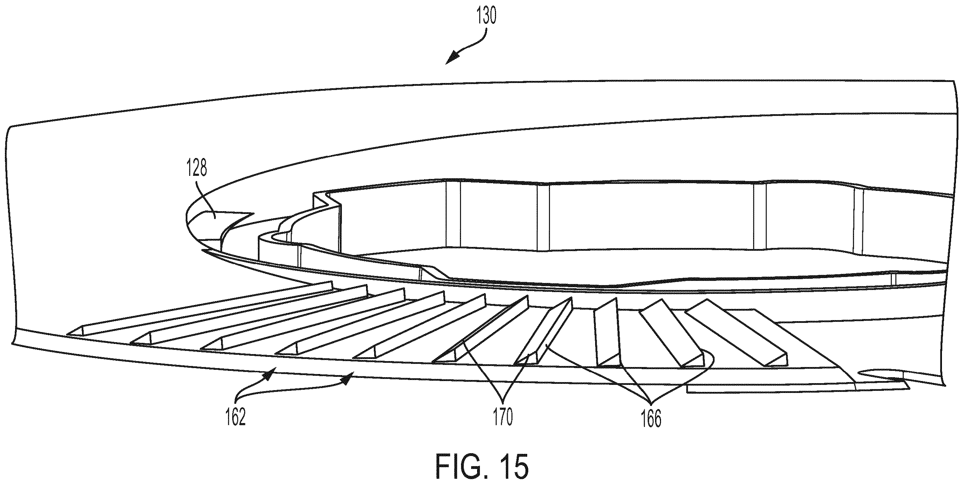

At the transition from the blade member 142 to the spiral portion 130, the spiral portion 130 includes a number (e.g., ten shown) of ridges 162 on the spiral face. The ridges 162 are shaped (e.g., triangular) and positioned (e.g., equidistant) to engage with and "lift" material being cut from the ground, acting as a "water wheel". Each ridge 162 has a generally triangular shape with (see Fig. 15) a perpendicular leading face 166 and an angled (e.g., between about 30° and about 45°) trailing face 170.

The illustrated ridges 162 have substantially the same shape. The ridges 162 extend at an angle of between about X° and about Y° from a radial direction. In the illustrated construction, the ridges 162 are oriented such that the space between each ridge 162 increases in a direction away from the axis A. Also, the ridges 162 are spaced a distance from the outer rim 124 and from the outer edge of the spiral portion 130.

In other constructions (not shown), the edger attachment 100 may include fewer or more than ten ridges 162. Also, each or all of the ridges 162 may have a different shape, angle, etc., than illustrated. In addition, the ridges 162 may have a different spacing.

From the transition through the majority of the ridge portion, the spiral portion 130 is flush with a blade member 142. The illustrated spiral portion 130 begins to diverge and spiral away from the blade portion 134 proximate the trailing edge of the ridge portion (e.g., between the last two ridges 162).

The blade member 142 defines a number (e.g., three shown) of notches 174 towards the trailing edge 150. The notches 174 facilitate digging and cutting action of the blade member 142. The notches 174 extend at an angle of between about X° and about Y° from a radial direction.

To install the edger attachment 100 on the head 10, the actuating mechanism is operated (e.g., the strike plate 30 is depressed to move the carrier 34 downwardly) to adjust the retainers 26 to the release position, opening the channel 22. The attachment 100 is installed on the body 14 into the channel 22 with each drive projection 42 being received in an associated notch 112 and each boss 54 being received in an associated recess 116. To retain the attachment 100, the actuating mechanism is operated (e.g., the strike plate 30 is released, and the spring 38 moves the carrier 34 upwardly) to adjust the retainers 26 to the retaining position, covering the channel (see Fig. 6).

To remove the attachment 100, the process is reversed. The actuating mechanism is operated to move the retainers 26 to the release position, uncovering the channel 22. The attachment 100 may then be removed from the channel 22 and from the head 10. If the trimmer is held in the operating orientation, the attachment 100 will fall off of the head 10.

To install another attachment 100, the user may invert the trimmer so that the head 10 faces upwardly and place the attachment 100 on the head 10. The actuating mechanism is operated to move the retainers 26 to the retaining position, covering the channel 22 and retaining the attachment 100. Due to the simplicity of changing the attachment 100, a user may interchange attachments 100 very quickly (e.g., within seconds), with different attachments 100 being used for different operations (e.g., cutting, trimming, edging, blowing, etc.).

With the edger attachment 100 supported on the head 10, the head 10 is adjusted on the trimmer so that the axis A is substantially horizontal. In this position, the edger attachment 100 is substantially vertical. The edger attachment 100 is oriented with the spiral face (in Fig. 9) directed toward the lawn and the blade face (in Fig. 10) directed toward the surface (e.g., a sidewalk, driveway, etc.) to be edged.

The edger attachment 100 may include structure (not shown) to ensure that the attachment 100 is supported in the proper orientation on the head 10. The structure may include an interfering surface in the opening 108 (e.g., in a notch 112) which inhibits installation of the edger attachment 100 in the inverted orientation without interfering with operation of the associated retainer 26 or the radial drive projection 42. The structure may include an indication to the user of the proper orientation (e.g., "This side out.").

Operation of the trimmer causes rotation of the head 10 and the driven edger attachment 100. The edger attachment 100 rotates about the axis A in a clockwise direction in Fig. 9. The leading edge 146 of the blade portion 134 gradually enters the ground, and, as the edger attachment 100 continues to rotate, more of the blade member 142 digs into the ground. The notches 174 provide digging and cutting action to break up soil material.

With continued rotation, the leading edge 154 of the spiral portion 130 enters the ground. The ridges 162 remove and move cut soil material, and, proximate the end of the section with the ridges 162, the spiral portion 130 diverges from the blade portion 134 and moves the cut material outwardly, away from the surface being edged and into the adjacent lawn. As the trailing edge 158 of the spiral portion 130 rotates out of the ground, the leading edge 146 of the blade member 142 again gradually enters the ground to again begin the cutting process.

In the illustrated edger attachment 100, the blade portion 134 generally operates to cut and dig material, which is facilitated by the angled outer edge and the notches 174. The spiral portion 130 generally operates to further remove material, facilitated by the ridges 162, and to move cut material away from the surface being edged, facilitated by the spiral shape.

Existing edger devices (not shown) generally include a speed reduction device to reduce the speed of the edger blade compared to other outdoor products, such as a string trimmer. With the illustrated construction, the edger attachment 100 cuts the ground over an angular extent of less than 180° (e.g., between about 120° and about 160°). The construction of the blade portion 134 provides a cutting "speed reduction" for the edger attachment 100. With the illustrated edger attachment 100, the trimmer can thus be operated at "normal" speed for other attachments and without a speed reduction device.

In the illustrated construction, the edger attachment 100 includes components formed of different materials - the plastic spiral portion 130 and the metal blade portion 134. In other constructions, the components may be formed of other materials and may be formed of the same material.

The embodiment(s) described above and illustrated in the figures are presented by way of example only and are not intended as a limitation upon the concepts and principles of the present disclosure. As such, it will be appreciated that variations and modifications to the elements and their configuration and/or arrangement exist within the scope of the appended claims.

## Claims

1. An edger blade (100) comprising:
a body (104) providing an interface for attachment to a drive mechanism for rotation about an axis (A), the body (104) being formed of a first material; and
a blade portion (134) coupled to the body (104), the blade portion (134) being oriented in a plane substantially perpendicular to the axis (A), the blade portion (134) being formed of a second material different than the first material,
**characterized in that**:
the body (104) has a spiral portion (130) spiraling along the axis (A).

2. The edger blade (100) of claim 1, wherein the interface defines a notch (112) for receiving a radial drive projection (42) of a trimmer head (10) when the edger blade (100) is in driving engagement.

3. The edger blade (100) of claims 1 or 2, wherein the blade portion (134) includes a blade member (142) and a radial length of the blade member (142) increases along its circumference.

4. The edger blade (100) of any one of the preceding claims, wherein the blade portion has a radial outer edge extending at least partially about the axis (A), the blade portion (134) has an increasing radial length in a direction of rotation of the edger blade (100), and the blade portion (134) defines notches (174) extending inwardly from the radial outer edge.

5. The edger blade (100) of any one of the preceding claims, wherein a radial length of the body (104) decreases along its circumference.

6. The edger blade (100) of claim 5, wherein the decrease is in a direction of rotation of the body (104).

7. The edger blade (100) of any one of the preceding claims, wherein the body (104) includes a plurality of axially-projecting ridges (162) on one face.

8. The edger blade (100) of claim 7, wherein the plurality of axially-projecting ridges (162) are shaped and positioned to engage with material being cut from a ground surface.

9. The edger blade (100) of claim 7 or 8, wherein the plurality of axially-projecting ridges (162) are positioned on the spiral portion (130) of the body (104).

10. The edger blade (100) of claim 9, wherein the blade portion (134) includes a blade member (142); and wherein the plurality of axially-projecting ridges (162) are positioned on the spiral portion (130) of the body (104) at a transition from the blade member (142) to the spiral portion (130).

11. The edger blade (100) of any one of claims 1 to 3, wherein the blade portion (134) has a radial outer edge and defines notches (174) extending from the radial outer edge.

12. The edger blade (100) of claim 11, wherein the notches (174) extend inwardly from the radial outer edge at an angle less than 90 degrees relative to the axis (A).

13. A trimmer comprising:
a trimmer head (10) having a drive mechanism; and
the edger blade (100) of any one of the preceding claims providing the interface for attachment to the drive mechanism.

## Patentansprüche

1. Kantenklinge (100), umfassend:
einen Körper (104), der eine Verbindungsstelle zur Befestigung an einem Antriebsmechanismus zur Drehung um eine Achse (A) bereitstellt, wobei der Körper (104) aus einem ersten Material gebildet ist; und
einen Klingenabschnitt (134), der mit dem Körper (104) gekoppelt ist, wobei der Klingenabschnitt (134) in einer Ebene ausgerichtet ist, die im Wesentlichen senkrecht zu der Achse (A) ist, wobei der Klingenabschnitt (134) aus einem zweiten Material gebildet ist, das von dem ersten Material verschieden ist,
**dadurch gekennzeichnet, dass:**
der Körper (104) einen spiralförmigen Abschnitt (130) aufweist, der spiralförmig entlang der Achse (A) verläuft.

2. Kantenklinge (100) nach Anspruch 1, wobei die Verbindungsstelle eine Kerbe (112) zum Aufnehmen eines radialen Antriebsvorsprungs (42) eines Trimmerkopfes (10) definiert, wenn sich die Kantenklinge (100) im Antriebseingriff befindet.

3. Kantenklinge (100) nach Anspruch 1 oder 2, wobei der Klingenabschnitt (134) ein Klingenelement (142) einschließt und eine radiale Länge des Klingenelements (142) entlang seines Umfangs zunimmt.

4. Kantenklinge (100) nach einem der vorhergehenden Ansprüche, wobei der Klingenabschnitt eine radiale Außenkante aufweist, die sich zumindest teilweise um die Achse (A) erstreckt, der Klingenabschnitt (134) eine zunehmende radiale Länge in einer Drehrichtung der Kantenklinge (100) aufweist und der Klingenabschnitt (134) Kerben (174) definiert, die sich von der radialen Außenkante nach innen erstrecken.

5. Kantenklinge (100) nach einem der vorhergehenden Ansprüche, wobei eine radiale Länge des Körpers (104) entlang seines Umfangs abnimmt.

6. Kantenklinge (100) nach Anspruch 5, wobei die Abnahme in einer Drehrichtung des Körpers (104) erfolgt.

7. Kantenklinge (100) nach einem der vorhergehenden Ansprüche, wobei der Körper (104) eine Vielzahl von axial vorstehenden Rippen (162) auf einer Fläche aufweist.

8. Kantenklinge (100) nach Anspruch 7, wobei die Vielzahl von axial vorstehenden Rippen (162) zum Eingriff mit Material geformt und positioniert sind, das aus einer Bodenfläche geschnitten wird.

9. Kantenklinge (100) nach Anspruch 7 oder 8, wobei die Vielzahl von axial vorstehenden Rippen (162) auf dem Spiralabschnitt (130) des Körpers (104) positioniert sind.

10. Kantenklinge (100) nach Anspruch 9, wobei der Klingenabschnitt (134) ein Klingenelement (142) einschließt; und wobei die Vielzahl von axial vorstehenden Rippen (162) auf dem Spiralabschnitt (130) des Körpers (104) an einem Übergang von dem Klingenelement (142) zu dem Spiralabschnitt (130) positioniert ist.

11. Kantenklinge (100) nach einem der Ansprüche 1 bis 3, wobei der Klingenabschnitt (134) eine radiale Außenkante aufweist und Kerben (174) definiert, die sich von der radialen Außenkante erstrecken.

12. Kantenklinge (100) nach Anspruch 11, wobei sich die Kerben (174) von der radialen Außenkante in einem Winkel von weniger als 90 Grad relativ zur Achse (A) nach innen erstrecken.

13. Trimmer, umfassend:
einen Trimmerkopf (10) mit einem Antriebsmechanismus; und
die Kantenklinge (100) nach einem der vorhergehenden Ansprüche, das die Verbindungsstelle zur Befestigung an dem Antriebsmechanismus bereitstellt.

## Revendications

1. Lame de coupe-bordure (100) comprenant :
un corps (104) fournissant une interface pour fixation à un mécanisme d'entraînement pour rotation autour d'un axe (A), le corps (104) étant formé d'un premier matériau ; et
une partie de lame (134) couplée au corps (104), la partie de lame (134) étant orientée dans un plan essentiellement perpendiculaire à l'axe (A), la partie de lame (134) étant formée d'un deuxième matériau différent du premier matériau,
**caractérisée en ce que**
le corps (104) a une partie en spirale (130) s'enroulant le long de l'axe (A).

2. Lame de coupe-bordure (100) selon la revendication 1, dans laquelle l'interface définit une encoche (112) pour recevoir une saillie d'entraînement radiale (42) d'une tête de tondeuse (10) lorsque la lame de coupe-bordure (100) est en prise d'entraînement.

3. Lame de coupe-bordure (100) selon les revendications 1 ou 2, dans laquelle la partie de lame (134) inclut un élément de lame (142) et une longueur radiale de l'élément de lame (142) augmente le long de sa circonférence.

4. Lame de coupe-bordure (100) selon l'une quelconque des revendications précédentes, dans laquelle la partie de lame a un bord externe radial s'étendant au moins partiellement autour de l'axe (A), la partie de lame (134) a une longueur radiale croissante dans une direction de rotation de la lame de coupe-bordure (100), et la partie de lame (134) définit des encoches (174) s'étendant vers l'intérieur à partir du bord externe radial.

5. Lame de coupe-bordure (100) selon l'une quelconque des revendications précédentes, dans laquelle une longueur radiale du corps (104) diminue le long de sa circonférence.

6. Lame de coupe-bordure (100) selon la revendication 5, dans laquelle la diminution est dans un sens de rotation du corps (104).

7. Lame de coupe-bordure (100) selon l'une quelconque des revendications précédentes, dans laquelle le corps (104) inclut une pluralité de crêtes faisant saillie axialement (162) sur une face.

8. Lame de coupe-bordure (100) selon la revendication 7, dans laquelle la pluralité de crêtes faisant saillie axialement (162) sont profilées et positionnées pour venir en prise avec un matériau qui est en train d'être coupé à partir d'une surface de sol.

9. Lame de coupe-bordure (100) selon la revendication 7 ou 8, dans laquelle la pluralité de crêtes faisant saillie axialement (162) sont positionnées sur la partie en spirale (130) du corps (104).

10. Lame de coupe-bordure (100) selon la revendication 9, dans laquelle la partie de lame (134) inclut un élément de lame (142) ; et dans laquelle la pluralité de crêtes (162) faisant saillie axialement sont positionnées sur la partie en spirale (130) du corps (104) à une transition de l'élément de lame (142) à la partie en spirale (130).

11. Lame de coupe-bordure (100) selon l'une quelconque des revendications 1 à 3, dans laquelle la partie de lame (134) présente un bord externe radial et définit des encoches (174) s'étendant à partir du bord externe radial.

12. Lame de coupe-bordure (100) selon la revendication 11, dans laquelle les encoches (174) s'étendent vers l'intérieur à partir du bord externe radial selon un angle inférieur à 90 degrés par rapport à l'axe (A).

13. Tondeuse comprenant :
une tête de tondeuse (10) ayant un mécanisme d'entraînement ; et
la lame de coupe-bordure (100) selon l'une quelconque des revendications précédentes fournissant l'interface de fixation au mécanisme d'entraînement.
